# EUROPEAN PATENT APPLICATION

(11) **EP 4 734 137 A1**
(43) Date of publication of application: **29.04.2026**
(21) Application number: 24208623.9
(22) Date of filing: 24.10.2024
(51) Int. Cl.: H01H 1/56, H01H 9/00, H01H 1/64

(54) **CONTACT STRUCTURE FOR AN ON-LOAD TAP CHANGER, ON-LOAD TAP CHANGER AND METHOD FOR PRODUCING A CONTACT STRUCTURE**

(71) Applicant: Hitachi Energy Ltd, 8050 Zürich (CH)
(72) Inventor: Krainer, Per, 78454 Borlänge (SE); Haghighat Naeini, Elham, Raleigh, NC 27612 (US); Sekula, Robert, 30-613 Krakow (PL)
(74) Representative: Epping - Hermann - Fischer

(57) **Abstract**

A contact structure (10) for an on-load tap changer (100) is provided, wherein the contact structure (10) is formed in one-piece. The contact structure (10) comprises a dense part (4) and at least one hollow part (2, 2A, 2B) arranged next to the dense part (4). The contact structure (10) comprises at least one shielding area (3, 3A, 3B), wherein at least one shielding area (3, 3A, 3B) is arranged next to the at least one hollow part (2, 2A, 2B).

Moreover, an on-load tap changer (100) comprising at least one contact structure (10) and a method for producing a contact structure (10) are provided.

## Description

The present disclosure relates to a contact structure for an on-load tap changer, an on-load tap changer comprising at least one contact structure and a method for producing a contact structure.

Tap changer functionality is to regulate output voltage of a transformer. Such a tap changer has dozens of unique parts, for instance copper parts, and usually has a high weight. There can be several heavy contact structures for instance in each tap changer. Considering the high material cost and the necessity of being sustainable, a new technical design of the contact structure is desired for consuming less raw material and producing less waste.

This disclosure discusses innovative solutions for realizing a compact and cost-efficient contact structure for an on-load tap changer, OLTC, wherein the contact structure has highly effective shielding effect.

Embodiments of the disclosure, for instance as defined in the appended claims, address the above shortcomings in the art in whole or in part. The embodiments of the disclosure relate to a contact structure for an on-load tap changer, an on-load tap changer comprising at least one contact structure and a method for producing a contact structure.

According to an embodiment of a contact structure for an on-load tap changer, OLTC, the contact structure comprises a dense part and at least one hollow part arranged next to the dense part. The contact structure comprises at least one shielding area arranged next to the at least one hollow part. The contact structure can be formed in one-piece. The contact structure can comprise several shielding areas, each of which is arranged next to one hollow part. When the shielding area is arranged next to one hollow part, the shielding area can directly adjoin the one hollow part. For instance, the hollow part is surrounded by a curved surface of the shielding area at least in places.

Such a contact structure with shielding functionality in OLTC can be responsible for conducting current as well as for absorbing and redirecting alternated current, AC, electric field with high efficiency. Compared to conventional contact structures, in virtue of the hollow part/s, the weight of the contact structure can be reduced significantly, resulting in saving large amount of raw materials. Since the shield effect mainly depends on the form and nature of the surfaces of the shielding areas, the hollow parts do not have any negative impact on the shielding effect of the shielding areas.

According to a further embodiment of the contact structure, the shielding area has a curved surface. The curved surface can be formed by a wall which is dense or has a lattice form. When the wall of the curved surface is dense, it is possible that the curved surface does not have any opening. When the wall of the curved surface has a lattice form, it is possible that the curved surface comprises openings.

According to a further embodiment of the contact structure, it comprises two hollow parts and two shielding areas, wherein each of the two shielding areas comprises or is arranged next to one of the two hollow parts. The shielding areas can comprise electrically conductive surfaces configured to absorb and/or redirect AC electric fields. The conductive surfaces of the shielding areas can be curved surfaces, for instance convex curved surfaces. The conductive surfaces of the shielding areas can be formed by lateral freely accessible surfaces of the contact structure, for instance of the hollow parts of the contact structure. It is possible that the curved surfaces of both shielding areas are formed from curved walls which are dense or have a lattice form. It is also possible for one shielding area having a dense wall and another shielding area having a lattice wall.

According to a further embodiment of the contact structure, the contact structure as a whole has a symmetric geometric outer shape, for instance a mirror-symmetric outer shape. In this case, it is possible to define at least one mirror-plane, along which the contact structure can be cut into two halves having substantially identical or identical outer shape. If there is only one single such mirror-plane, the contact structure is referred to as having one-fold mirror-symmetric outer shape. It is possible, however, that the contact structure as a whole has a two-fold mirror-symmetric outer shape. In the latter case, there are exactly two mirror-planes, each of which can cut the contact structure into two halves having substantially identical or identical outer shape. The two mirror-planes can be orthogonal to each other. In addition, it is possible for the contact structure to have a one-fold or two-fold mirror-symmetric inner shape. The symmetric form of the contact structure can result in an improved shielding effect.

According to a further embodiment of the contact structure, it is made of an electrically conductive material or of different electrically conductive materials. Such electrically conductive materials can be copper or copper alloy, aluminum, silver or other electrically conductive, for instance printable materials. It is possible that the dense part and the shielding areas comprising or being arranged next to the hollow parts can be made of the same material or of different materials. For instance, the shielding area/s can be made of aluminum and the dense part can be made of copper, or vice versa.

According to a further embodiment of the contact structure, the contact structure comprises an opening to the hollow part. Each of the hollow parts can comprise such an opening. The opening can be used to remove additional or remaining powders inside the hollow part when the contact structure is produced by an additive manufacturing method. Moreover, via the opening, the hollow part can be filled with a cooling medium so that heat dissipation can be optimized. The opening can be located at a bottom area adjoining a curved surface of the at least one shielding area. For instance, this opening or the bottom area is not exposed to electrical field and does not have any substantial impact on the shielding effect of the shielding area.

According to a further embodiment of the contact structure, a support structure located within the hollow part. The support structure can be in direct mechanical contact to a wall surrounding the hollow part. It is possible for each of the hollow parts to comprise one support structure. The support structure enhances the mechanical stability of the shielding area and reduces the risk of manufacturing failure when the contact structure is produced by an additive manufacturing method. The support structure can be tree-shaped or can have a lattice form or other geometrical forms.

According to a further embodiment of the contact structure, the at least one hollow part is surrounded by a wall having a thickness of 1.2 mm ± 0.5 mm. For instance, the thickness is from 1.0 mm to 1.7 mm, for instance less than 1.5 mm. The wall of the shielding area/s can have a constant thickness, for example up to production tolerances. A thickness of 1.2 mm ± 0.5 mm provides sufficient mechanical stability and at the same time sufficient shielding effect. The wall of the shielding area/s can be solid and dense. It is also possible for the wall to have a lattice form. The lattice form can have a thickness of the wall, namely a thickness of 1.2 mm ± 0.5 mm. This disclosure, however, shall not be limited to the thickness of the wall mentioned above.

According to a further embodiment of the contact structure, the dense part comprises a shaft and a head part connecting the shaft to the at least one hollow part. The head part can comprise freely accessible contact areas of the contact structure. The freely accessible contact area/s can be understood as outermost surface/s of the contact structure configured to have an electrical and/or mechanical contact with a tap contact or with a switch of the tap changer.

The shaft and the head part can be made from the same electrically conductive material or from different electrically conductive materials. Both the shaft and the head part can be made dense for achieving high current and heat conducting properties. In other words, both the shaft and the head part and thus the entire dense part can be void of any interior hollow parts or cavities.

According to a further embodiment of the contact structure, the freely accessible contact areas are surfaces of front protrusions of the head part. The protrusions are part of the dense part and are configured to withstand a resistivity to contact load up to 40 N or higher. The protrusions can have rounded and smooth contact surfaces for reducing mechanical friction and for achieving a reliable electrical connection between the contact structure and tap contacts of the tap changer. The protrusions can be located between two shielding areas of the contact structure.

According to a further embodiment of the contact structure, the head part of the dense part comprises a fixation structure facing away from the freely accessible contact areas, wherein the fixation structure comprises a sealing area. The sealing area can be formed at least by a groove surrounding the shaft in plan view.

According to a further embodiment of the contact structure, the head part of the dense part comprises the fixation structure facing away from the freely accessible contact areas, i.e. facing the shaft. The fixation structure can comprise rear protrusions of the head part.

According to a further embodiment of the contact structure, the fixation structure comprises the sealing area. The sealing area can be formed at least by the groove by a groove. The groove can surround the rear protrusions of the head part. The fixation structure comprising the rear protrusions and the groove can be configured to form a sealing area for preventing leakage of cooling medium such as oil.

According to a further embodiment of the contact structure, the dense part comprises a leg part as integral part of the shaft opposite to the at least one hollow part. The leg part can comprise a through-hole. The through-hole is configured to receive an electrical connection for instance to a winding of a transformer.

According to a further embodiment of the contact structure, the shaft has a tapered form. Along a main extension direction of the dense part, a circumference and/or a cross-section of the shaft may monotonically change. When the circumference and/or the cross-section of the shaft monotonically change/s for instance along a vertical direction along the shaft, the circumference and/or the cross-section may increase or decrease stepwise or continuously. The tapered form of the shaft facilitates a process of fixing and sealing the contact structure for instance to an opening on a wall of a tank of the tap changer.

According to an embodiment of an on-load tap changer, it comprises at least one contact structure or a plurality of the contact structures described here. Using a plurality of the contact structures, wherein each of the contact structures can be electrically connected to a winding, i.e. to a coil, of a transformer, it is possible to continuously regulate an output voltage of the transformer without interruption.

According to a further embodiment of the on-load tap changer, it comprises a tank and at least one contact structure described here, wherein the contact structure is arranged partly inside and partly outside the tank. The shielding area and the hollow part of the contact structure can be arranged completely inside the tank. The dense part of the contact structure can partly extend throughout an opening of the tank and can be arranged partly inside and partly outside the tank.

According to an embodiment of a method for producing a contact structure for an on-load tap changer, the method comprises an additive manufacturing step for producing the contact structure described here. Thus, such a contact structure can be formed in one-piece. The contact structure comprises a dense part and at least one hollow part arranged next to the dense part. Moreover, the contact structure comprises at least one shielding area comprising or being arranged next to the at least one hollow part. Using the additive manufacturing step, any or a plurality of the contact structures described here can be produced. The additive manufacturing step can comprise a 3D printing step.

Using the freedom of design offered by additive manufacturing and 3D printing methods applied to electrically conductive materials like copper, copper alloys, etc., less raw materials are needed in the shielding areas. For preventing possible overheating, the current carrying part of the contact structure can be formed to be dense. It has been found out that for producing such a contact structure, up to 53 % or raw materials can be saved while maintaining the shielding, current and heat conducting properties of the contact structure.

The present disclosure describes several aspects of a contact structure for an on-load tap changer as well as of an on-load tap changer having such contact structure/s and of a method for producing such a contact structure on the basis of their embodiments and examples. Every feature described with respect to one of the aspects is also disclosed herein with respect to the other aspect, even if the respective feature is not explicitly mentioned in the context of the specific aspect. For example, the method described in this disclosure is directed to a method for producing the contact structure described here. Thus, features and advantages described in connection with the contact structure can be used for the method, and vice versa.

While the disclosure is amenable to various modifications and alternative forms, specifics thereof are shown by way of examples in the figures and will be described in detail. It should be understood, however, that the intention is not to limit the disclosure to the particular described embodiments and examples. On the contrary, the intention is to cover all modifications, equivalents, and alternatives falling within the scope of the disclosure defined by the appended claims.

The accompanying figures are included to provide a further understanding. In the figures, elements of the same structure and/or functionality may be assigned to the same reference signs. It is to be understood that the examples shown in the figures are illustrative representations and are not necessarily true to scale.
Figure 1 schematically shows a general concept of a contact structure for an on-load tap changer according to an example of the disclosure.
Figure 2 basically shows the contact structure according to the example shown in Figure 1, wherein the contact structure is cut in two halves through a middle plane.
Figure 3 schematically shows a shielding area of the contact structure comprising a hollow part.
Figure 4 schematically shows the contact structure basically according to the example shown in Figure 1 in another perspective view.
Figure 5 schematically shows the contact structure basically according to the examples shown in Figures 1, 3 and 4 in another perspective view, wherein parts of the outer surface of contact structure are illustrated in a half-transparent manner.
Figure 6 schematically shows a tap changer at a reception portion for receiving the contact structure.

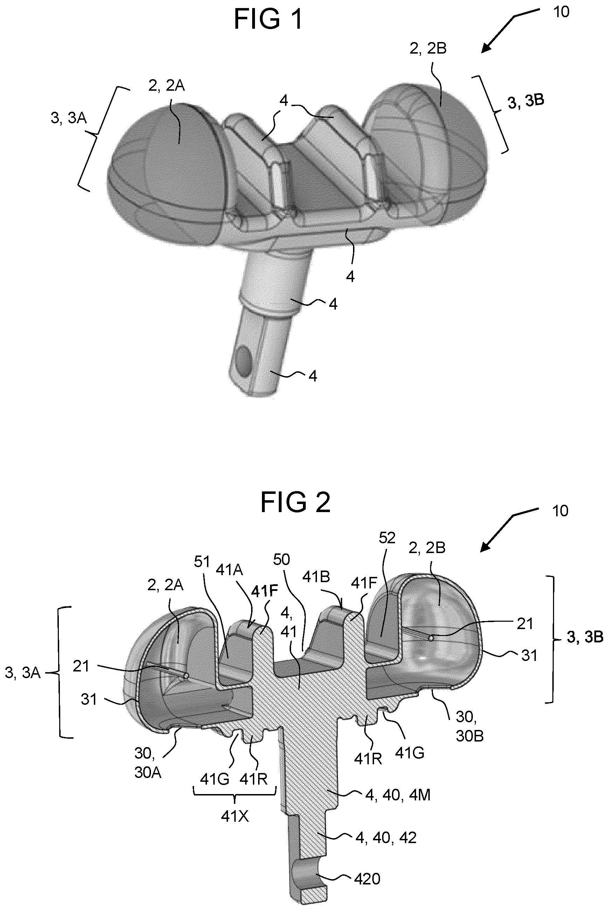

Figure 1 schematically shows a general concept of a contact structure 10 for an on-load tap changer according to an example of the disclosure. The contact structure 10 comprises a dense part 4 and at least one hollow part 2 arranged next to the dense part 4. The contact structure 10 comprises at least one shielding area 3 being arranged next to or comprising the at least one hollow part 2. The dense part 4 of the contact structure 10 can be understood as that part of the contact structure 10 that is void of any interior cavities or hollow parts. A through-hole, however, shall not be considered as an interior cavity or hollow part.

The contact structure 10, for instance the whole contact structure 10, can be formed in one-piece. The latter can mean that the whole contact structure 10 is formed from a single piece, for instance using an additive manufacturing method. For example, the contact structure 10 does not comprise any interior interfaces between different integral parts of the contact structure 10, wherein the interior interfaces are surface of a connecting layer. For instance, the integral parts of the contact structure 10 directly adjoin each other and are mechanically connected to each other without the need of additional connecting layer/s such as adhesive or soldering layers. The integral parts of the contact structure 10 can comprise the dense part 4, one or several shielding areas 3, one or several hollow parts 2 and/or other integral parts of the contact structure 10.

As shown in Figure 1, the contact structure 10 comprises a first hollow part 2A and a second hollow part 2B. The contact structure 10 comprises a first shielding area 3A comprising or surrounding the first hollow part 2A at least in places. The contact structure 10 further comprises a second shielding area 3B comprising or surrounding the second hollow part 2B at least in places. Both the first shielding area 3A and the second shielding area 3B are arranged next to the dense part 4 and directly adjoin the dense part 4 and/or the hollow part 2A/2B.

The contact structure 10 as a whole can have a symmetric geometric outer shape, for instance a mirror-symmetric outer shape. When the contact structure 10 has a symmetric geometric outer shape, the contact structure 10 can be cut into at least two or more parts, wherein the at least two or more parts have substantially identical or identical outer shape. The contact structure 10 as a whole can be symmetric, for instance mirror-symmetric regarding its geometric inner shape. It is also possible for the contact structure 10 to be symmetric, for instance mirror-symmetric regarding its geometric inner and outer shapes.

The contact structure 10 or the dense part 4 of the contact structure 10 shown in Figure 1 can be cut into two or four parts, wherein the singulated two or four parts have substantially identical or identical outer and/or inner shape/s. Thus, the contact structure 10 or the dense part 4 of the contact structure 10 shown in Figure 1 can have at least one mirror-plane or two mirror-planes, wherein the contact structure 10 or the dense part 4 can be singulated along the mirror-plane/s into at least two or four substantially identical or identical parts.

The first shielding area 3A and the second shielding area 3B can have identical outer shape and/or inner shape. The first hollow part 2A and the second hollow part 2B can have identical form and/or geometry. As shown in Figure 1, at least in places, the first shielding area 3A and the second shielding area 3B can have or can be formed by curved, for instance convex curved outer surfaces. For example, the curved or convex curved outer surface of the first shielding area 3A and/or of the second shielding area 3B faces away from the dense part 4. Surface/s of the first shielding area 3A and/or of the second shielding area 3B facing towards the dense part 4 can be plane. It is also possible for such surface/s being common surface/s of the dense part 4 and of the shielding area/s 3A/3B.

The contact structure 10 shown in Figure 1 comprises two, for instance exactly two hollow parts 2A and 2B, and two, for instance exactly two shielding areas 3A and 3B. Each of the two shielding areas 3A and 3B can be arranged next to or comprise or surround one, for instance exactly one of the two hollow parts 2A and 2B. The hollow part/s 2A/2B can be filled with a gaseous medium such as surrounding air. In operation the tap changer, for instance of the on-load tap changer, the hollow part/s 2A/2B can be filled with a liquid medium, for instance with a cooling fluid such as oil.

The contact structure 10 can be made of an electrically conductive material or of different electrically conductive materials, for example of one metal or of different metals. The contact structure 10 can be made, for example, of copper, copper alloy, aluminum, silver or of other materials having similar electrical conductivity and/or shielding properties. For example, the contact structure 10 is made of one or several printable electrically conductive material/s. The dense part 4 and the shielding area/s 3 can be made of the same material or of different materials.

Figure 2 basically shows the contact structure 10 according to the example shown in Figure 1, wherein the contact structure 10 is cut into two halves through a first middle plane being for instance a first mirror-plane, and wherein one half of the contact structure 10 is shown in Figure 2. The mirror-plane can be understood as an imaginary plane cutting the contact structure 10 into two halves having substantially identical or identical outer and/or inner shape/s. According to Figure 2, each of the hollow parts 2A and 2B, the shielding areas 3A and 3B and/or the dense part 4 can be cut into two halves, wherein the two halves or outer and/inner shapes of the two halves can be symmetric to each other.

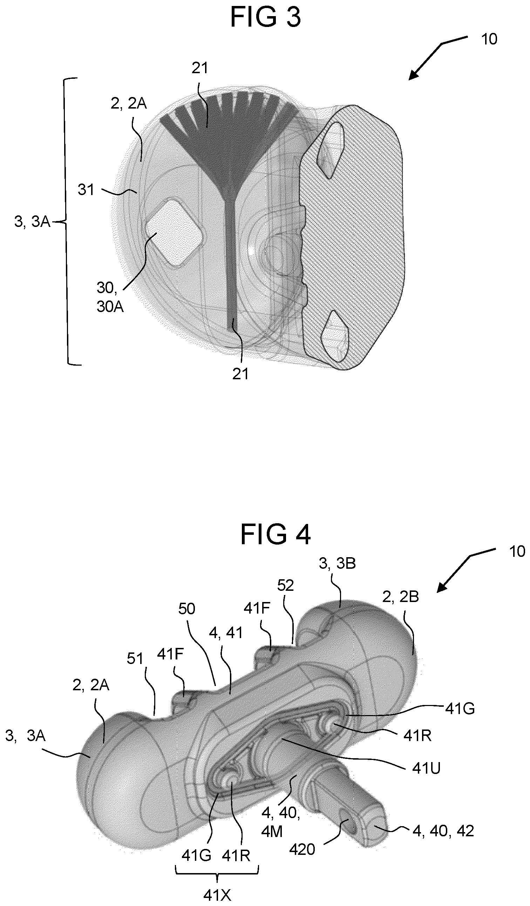

Cutting the contact structure 10 along the first middle plane as shown in Figure 2, the two halves of the contact structure 10 can have an identical outer shape. It is, however, not necessary for the two halves of the contact structure 10 to have an identical inner shape, for instance due to support structures 21 inside the hollow parts 2A and 2B. Such a support structure 21 is shown for instance in Figure 3.

Cutting the contact structure 10 along a mirror-plane, which is for instance a second middle plane being orthogonal to the first middle plane mentioned above, into two halves, these two halves of the contact structure 10 can have an identical outer shape and/or an identical inner shape. Cutting the contact structure 10 along the second middle plane, only the dense part 4 is cut into two halves which can be symmetric to each other through the second middle plane. The hollow parts 2A and 2B and/or the shielding areas 3A and 3B are not cut by the second middle plane. The first hollow part 2A, however, can be symmetric to second hollow part 2B through the second middle plane. It is possible for the shielding areas 3A and 3B to be symmetric to each other through the second middle plane. Such a mirror-plane being the second middle plane can cut the half of the contact structure 10 shown in Figure 2 into two further identical halves.

As shown in Figures 1 and 2, the dense part 4 comprises a shaft 40 and a head part 41 directly adjacent the shaft 40.

The head part 41 is directly adjacent to the first shielding area 3A and the second shielding area 3B. Thus, the head part 41 is a region of the dense part 4 which is directly adjacent to the shaft 40, the shielding areas 3A and 3B and thus to the hollow part 2A and 2B. The shaft 40 is oriented vertically to the head part 41. Thus, in this disclosure, a vertical direction can be understood to mean a direction which is parallel to main extension direction of the shaft 40. Hence, a lateral direction is understood to mean a direction which is orthogonal to the vertical direction.

On its front side facing away from the shaft 40, the head part 41 comprises at least one front protrusion 41F or two front protrusions 41F or exactly two front protrusions 41F. The front protrusion 41F can be referred to as front pin. The front protrusion 41F can be a vertical local elevation of head part 41 facing away from the shaft 4. The front protrusions 41F can have the same vertical height. For example, the front protrusion 41F has a smaller vertical height compared to a vertical height of a side wall, for instance of a vertical side wall of the shielding area 3. Thus, along the vertical direction, the shielding area/s 3 can project beyond the front protrusion/s 41F resulting in an effective shielding effect for the regions at the protrusion/s 41F or between the protrusion/s 41F.

A first protrusion 41F comprises a front surface which can form a contact area 41A, for instance a first contact area 41A. A second protrusion 41F comprises a front surface which can form a further contact area 41B, for instance a second contact area 41A. Each of the protrusions 41F can have a trapezoid form, for instance a symmetrical trapezoid form with a smaller basic side facing away from the shaft 40.

Along the vertical direction, the protrusion 41F can have a varying lateral length or width. The protrusion 41F can have rounded corners and/or a rounded tip.

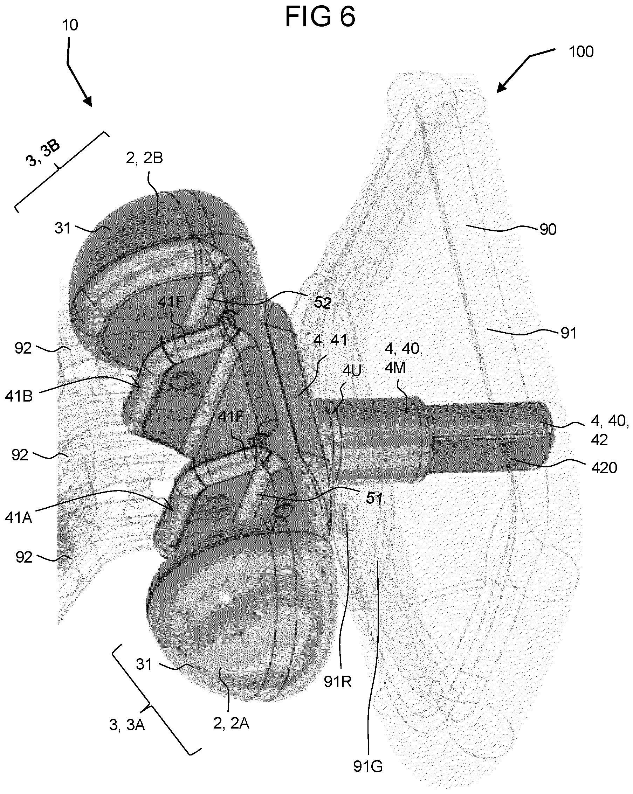

Surfaces of the rounded corners and/or the rounded tip of the protrusion/s 41F can form the first contact area 41A or the second contact area 41B. The contact area/s 41A/41B can be configured to make electrical connection with a tap contact 92 or with different tap contacts 92 as illustrated in Figure 6. The tap contact 92 is located inside the tap changer 100. The tap contact 92 can be referred to as a switch. During operation of the tap changer 100 or of a transformer, different tap contacts 92 or different switches can be moved to be in electrical connection with different contact structures 10 for regulating an output voltage of the transformer.

A region between two protrusions 41F forms a trench 50 which is arranged centrally on the head part 41 and can be referred to as a central trench 50. Along a lateral direction, the protrusions 41F and thus the central trench 50 can extend along an entire width of the head part 41. A region between a protrusion 41F and one of the shielding areas 3 forms a further trench 51 or 52 which is arranged sideward on the head part 41 and can be referred to as a sideward trench 51 or 52.

A first sideward trench 51 is located for instance between a first protrusion 41F and the first shielding area 3A. A second sideward trench 52 is located for instance between a second protrusion 41F and the second shielding area 3B. Along a lateral direction, the sideward trench/es 51 and/or 52 can extend along the entire width of the head part 41. The trenches 50, 51 and 52 are oriented parallel to each other and can have the same length. The central trench 50 can be wider, for instance at least 50% or at least 100% wider than the sideward trench 51 and/or 52.

In virtue of the trenches 50, 51 and 52 as well as of the geometrical forms of the protrusions 41F, an electrical connection between the contact structure 10 and different tap contacts 92 can be ensured in a simplified manner. The trenches 50, 51 and 52 can be configured to receive some parts of the tap contacts 92, for instance of the moving tap contacts 92 during operation of the tap changer 100. The rounded corners and/or rounded tip of the protrusion 41F can be configured to reduce mechanical friction and to achieve a reliable electrical connection between the contact structure 10 and the tap contacts 92.

The shielding areas 3A and 3B can directly adjoin the sideward trenches 51 and 52, respectively. In top view of the contact structure 10, the central trench 50 can be located entirely on the dense part 4 and does not have any overlaps with the hollow parts 2A and 2B. The sideward trench 51 or 52, however, may overlap with one hollow part 2A or 2B.

The hollow part 2A or 2B is surrounded by a wall 31 of the shielding area 3A or 3B at least in places. The wall 31 can have a thickness of 1.2 mm ± 0.5 mm, for instance between 0.7 mm and 1.7 mm, between 0.7 mm and 1.5 mm, between 0.7 mm and 1 mm, or between 1 mm and 1.5 mm. It is, however, possible to the wall to have smaller or larger thicknesses. The wall 31 can comprise a curved region facing away from the head part 41 of the dense part 4, a vertical plane region facing the head part 41 of the dense part 4, for instance facing the protrusion 41F of the head part 41, a lateral front plane region forming a plane floor area of the sideward trench 51 or 52 and/or a lateral rear region forming for instance a plane rear surface on a rear side of the head part 41.

As shown in Figures 2, 3 and 5, the contact structure 10 can comprise an opening 30 to the hollow part 2. The opening 30 can be located in the lateral rear region of the wall 31. For example, the opening 30 is formed in the region of the wall 31 forming a plane rear surface on the rear side of the head part 41. Thus, the opening 30 can be located at a lower, for instance at a plane part adjoining the shielding area 3. The opening 30 can be of circular, round, angular, square, rectangular or of another shape.

For example, the contact structure 10 comprises one opening 30A or 30B to the first hollow part 2A or to the second hollow part 2B adjoining a curved surface of the shielding area 3A or 3B. The openings 30A and 30B can be formed as holes for allowing a cooling fluid to flow into the hollow parts 2A and 2B of the contact structure 10. This results in an enhancement of the cooling effect since heat dissipation can be improved as the cooling fluid is allowed to flow all over the contact structure 10 also in the regions close to the high-current/ load areas. Moreover, during the manufacturing process of the contact structure 10, the openings 30A and 30B can be used to remove additional or remaining powders when the contact structure 10 is produced by an additive manufacturing method.

An additive manufacturing, also known as 3D printing, comprises for instance all manufacturing processes in which the contact structure 10 is built up layer by layer by adding materials. During this process, the newly added material bonds with the existing material so that no additional adhesives are required for fixing together different parts of the contact structure 10. Thus, using an additive manufacturing step, the contact structure 10, for example, the whole contact structure 10 having high complexity with filigree structures on the front side and the rear side of the head part 41 or cavities forming the hollow parts 2 can be formed in one-piece in an effective and resource-saving manner.

On its rear side facing towards the shaft 40, the head part 41 comprises at least one rear protrusion 41R or two rear protrusions 41R, for instance exactly two rear protrusions 41R. The rear protrusion 41R can be referred to as rear pin. The rear protrusions 41R can have a smaller vertical height and/or lateral width compared to the front protrusions 41F. For instance, a vertical height of the front protrusion/s 41F is at least twice, three times or four times as large as a vertical height of the rear protrusion/s 41R.

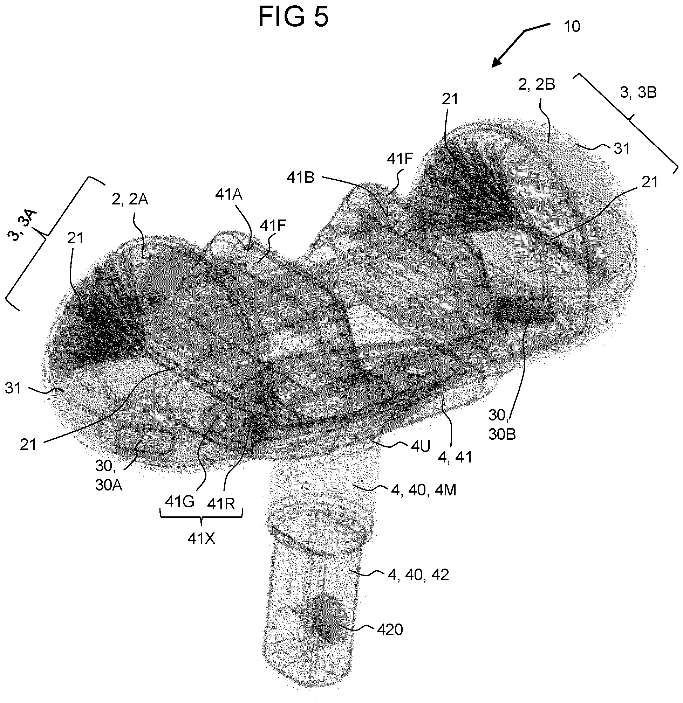

On its rear side, the head part 41 comprises a groove 41G. Such a groove 41G is shown for instance in Figures 2 and 5. The groove 41G can directly adjoin the rear protrusion/s 41R and/or the shaft 40 in places. In top view of the rear side of the head part 41, the groove 41G can form a closed loop laterally surrounding the protrusion/s 41R and/or the shaft 40. In top view of the contact structure 10, it is possible for the rear protrusion/s 41R and/or the groove 41G to have overlapping region/s with the hollow part/s 2A/2B and/or with the sideward trench/es 51/52.

Together with the rear protrusion/s 41R, the groove 4G can form a fixation structure 41X. The fixation structure 41X can be configured to fix and/or seal the contact structure 10 to a wall portion 91 of a tank 90 of the tap changer 100 as illustrated in Figure 6. The wall portion 91 is for instance a reception portion for receiving the contact structure 10.

As shown in Figure 6, the wall portion 91 can have an opening for receiving the shaft 40. While the head part 41 of the dense part 4 and the shielding areas 3 remain inside the tank 90, the shaft 40 can extend throughout the opening of the wall portion 91 and thus can be located partially outside the tank 90. The wall portion 91 shown in Figure 6 can comprise a cavity 91R or two or more such cavities 91R configured to receive the rear protrusion/s 41R of the contact structure 10. The wall portion 91 can comprise a local elevation 91G, whose geometry is adapted to the geometry of the groove 41G of the contact structure 10. Inserting the dense part 4 of the contact structure 10 into the wall portion 91 of the tank 90, a mechanically fixed and sealed connection between the contact structure 10 and the wall portion 91 of the tank 90 can be formed. The tank 90 can be filled with a cooling medium, for instance with a cooling fluid such as oil. The tank 90 can comprise a plurality of such wall portions 91 for receiving a plurality of contact structures 10.

Thus, as shown in Figures 1, 2 and 3 to 6, the dense part 4 comprises a shaft 40 and a head part 41, wherein the head part 41 connects the shaft 40 to the at least one hollow part 2. On its front side, the head part 41 comprises freely accessible contact areas 41A and 41B of the contact structure 10. The freely accessible contact areas 41A and 41B can be surfaces of the front protrusions 41F of the head part 41. On its rear side, the head part 41 of the dense part 4 comprises a fixation structure 41X facing away from the freely accessible contact areas 41A and 41B. The fixation structure 41X can comprise the rear protrusions 41R of the head part 41. The fixation structure 41X forms or comprises a sealing area, wherein the sealing area is formed by the rear protrusions 41R and/or a groove 41G surrounding the rear protrusions 41R of the head part 41. This is shown for instance in Figure 3.

The dense part 4 comprises a leg part 42 as integral part of the shaft 40 opposite to the at least one hollow part 2A or 2B, wherein the leg part 42 comprises a through-hole 420. The through-hole 420 is configured to receive an electrical connection, for instance electrically conductive cable/s or wire/s. The conductive cable/s or wire/s can electrically connect the contact structure 10 to a winding of a transformer.

The shaft 40 can have a tapered form, wherein along a main extension direction of the dense part 4, i.e. along a vertical direction, a circumference of the shaft 40 can monotonically change. A cross-section of the shaft 40 can change along the vertical direction. For instance, the circumference and/or the cross-section of the shaft 40 increases towards the head part 41. This facilitates the fixing and sealing the contact structure 10 to the wall portion 91 of the tank 90.

Along the vertical direction, the leg part 42 can have smaller circumferences and/or the cross-sections than a middle part 4M of the dense part 4. The middle part 4M is located between the leg part 42 and the head part 41. It is possible for the middle part 4M to have a tapered form. For example, the middle part 4M has an enlarged circumference and/or cross-section at the rear side of the head part 41. The cross-section or the circumference of the middle part 4M can be of circular form. The cross-section or circumference leg part 42 can be of circular form or differs from a circular form.

As explicitly shown in Figures 4 to 6, the middle part 4M can comprise a first region directly adjoining the head part 41 and a second region directly adjoining the leg part 42, wherein the first region has larger circumference and/or cross-section than the second region. The middle part 4M can comprise a transition region 4U, whose circumference and cross-section are smaller than the circumference and cross-section of the first region but larger than the circumference and cross-section of the second region, respectively.

Along the vertical direction, the circumference and cross-section of the transition region 4U can change monotonically, for instance continuously. In virtue of the transition region 4U, the sealing effect can be enhanced in a simplified manner. As shown in Figure 6, the transition region 4U can be located at least partly inside the opening of the wall portion 91 of the tank 90. The first region of the middle part 4M directly adjoining the head part 41 is located inside the tank 90. The second region of the middle part 4M directly adjoining the leg part 42 is located at least partly outside the tank 90. It is also possible that the dense part 4 comprises a further transition region between the middle part 4M and the leg part 42. Such further transition region is shown for instance in Figures 4, 5 and 6.

Within the hollow part 2, for instance within each of the hollow parts 2A and 2B, the contact structure 10 can comprise a support structure 21. Such a support structure 21 is shown for instance in Figure 2, 3 and 5. Since the shielding area 3 comprises or is arranged next to a hollow part 2 enclosed by a thin wall 31, whose thickness can be chosen to be less than 1.5 mm or less than 1.2 mm, and the whole contact structure 10 can be manufacturable with an additive manufacturing method, the support structure 21 arranged inside the hollow part 2 can be used to enhance the mechanical stability of the shielding area 3 and to eliminate the risk of manufacturing failure.

The support structure 21 can be a tree-shaped support structure 21 or can be of another geometrical form, for instance of a lattice form. The support structure 21 can be in direct mechanical contact to the wall 31 of the hollow part 2 or of the shielding area 3. For example, the support structure 21 extends along the entire lateral width or length of the hollow part 2. In case of having a tree-shaped form, the tree-shaped support structure 21 comprises a tree-top and a tree-trunk, wherein the tree-top and/or the tree-trunk can be in direct mechanical contact with the wall 31. The support structure 21 and the wall 31 can be formed from the same material, for instance from copper or from another electrically conductive material, for instance from a printable electrically conductive material. It is possible for the support structure 21 and the wall 31 to be formed from the different materials, for instance from different printable electrically conductive materials.

Figure 6 schematically shows a tap changer 100 at a reception portion for receiving the contact structure 10. The tap changer 100 is for instance an on-load tap changer 100 which comprises a tank 90 and at least one contact structure 10 described in this disclosure. The contact structure 10 is arranged partly inside and partly outside the tank 90. Here in Figure 6, only one wall portion 91 of the tank 90 is shown. The tank 90 can have a cylinder form, wherein a wall of the tank 90 can comprise a plurality of such wall portions 91 for receiving a plurality of contact structures 10.

As shown in Figure 6, the shielding area/s 3A/3B and the hollow part/s 2A/2B of the contact structure 10 are arranged completely inside the tank 90. The dense part 4 of the contact structure 10 extends throughout an opening of the tank 90, for instance throughout an opening of the wall portion 91, and is arranged partly inside and partly outside the tank 90. Outside the tank 90, the leg part 42 can be electrically connected to a winding of a transformer. For example, an electrical connection between the leg part 42 and the winding is realized by connecting a conductive cable or wire at the through-hole 420 of the leg part 42. Inside the tank 90, a tap contact 92 or different moveable tap contacts 92 can be brought in electrical connection with the contact structure 10 for instance at the freely accessible contact areas 41A and 41B of the contact structure 10.

The disclosure relates to innovative implementations of shielding contact structures 10 for an on-load tap changer 100. The contact structure 10 has shielding functionality for instance for AC electric fields. Instead of making use of conventional manufacturing methods like hot forging and machining, according to this disclosure, the method comprises an additive manufacturing step for producing the contact structure 10. Thus, the entire contact structure 10 comprising the hollow parts 2 can be formed in one-piece in a simplified manner. Moreover, using the additive manufacturing step, raw material can be saved up to 53 % compared to conventional manufacturing methods.

The examples shown in the Figures as stated represent some exemplary embodiments of a contact structure; therefore, they do not constitute a complete list of all embodiments according to the improved design of the contact structure as well as of the related tap changer or of the method for producing such a contact structure. Actual arrangements of the contact structure, the tap changer and of the method may vary from the exemplary embodiments described above.

### Reference Signs

- 100: tap changer
- 10: contact structure

- 90: tank of the tap changer
- 91: wall of the tank
- 91R: cavity
- 91G: local elevation
- 92: tap contact/ switch

- 2: hollow part
- 2A: first hollow part
- 2B: second hollow part

- 21: support structure

- 3: shielding area
- 3A: first shielding area
- 3B: second shielding area

- 30: opening to the hollow part
- 30A: first opening
- 30B: second opening

- 31: wall of shielding area/ hollow part

- 4: dense part
- 4M: middle part of the dense part
- 4U: transition region

- 40: shaft
- 41: head part of the dense part
- 41A: contact area/ first contact area
- 41B: contact area/ second contact area
- 41F: front protrusion/ front pin
- 41G: groove
- 41R: rear protrusion/ rear pin
- 41X: fixation structure

- 42: leg part of the dense part/ shaft
- 420: through-hole

- 50: trench, central trench
- 51: trench, first sideward trench
- 52: trench, second sideward trench

## Claims

1. A contact structure (10) for an on-load tap changer (100), wherein
- the contact structure (10) is formed in one-piece,
- the contact structure (10) comprises a dense part (4) and at least one hollow part (2, 2A, 2B) arranged next to the dense part (4), and
- the contact structure (10) comprises at least one shielding area (3, 3A, 3B) arranged next the at least one hollow part (2, 2A, 2B).

2. The contact structure (10) according to claim 1, wherein the shielding area (3, 3A, 3B) has a curved surface, and wherein the curved surface is formed by a wall (31) which is dense or has a lattice form.

3. The contact structure (10) according to any of previous claims comprising two hollow parts (2, 2A, 2B) and two shielding areas (3, 3A, 3B), wherein each of the two shielding areas (3, 3A, 3B) is arranged next to one of the two hollow parts (2, 2A, 2B).

4. The contact structure (10) according to any of previous claims, wherein the contact structure (10) as a whole has a symmetric geometric outer shape.

5. The contact structure (10) according to any of previous claims, wherein the contact structure (10) is made of an electrically conductive material or of different electrically conductive materials.

6. The contact structure (10) according to any of previous claims, wherein the contact structure (10) comprises an opening (30) to the hollow part (2, 2A, 2B).

7. The contact structure (10) according to any of previous claims, wherein a support structure (21) is located within the hollow part (2, 2A, 2B).

8. The contact structure (10) according to any of previous claims, wherein the at least one hollow part (2, 2A, 2B) is surrounded by a wall (31) having a thickness of 1.2 mm ± 0.5 mm.

9. The contact structure (10) according to any of previous claims, wherein the dense part (4) comprises a shaft (40) and a head part (41) connecting the shaft (40) to the at least one hollow part (2, 2A, 2B), wherein the head part (41) comprises freely accessible contact areas (41A, 41B) of the contact structure (10).

10. The contact structure (10) according to previous claim, wherein the freely accessible contact areas (41A, 41B) are surfaces of front protrusions (41F) of the head part (41).

11. The contact structure (10) according to claim 9 to 10, wherein the head part (41) of the dense part (4) comprises a fixation structure (41X) facing away from the freely accessible contact areas (41A, 41B), wherein the fixation structure (41X) comprises a sealing area, the sealing area being formed at least by a groove (41G) surrounding the shaft (40) in plan view.

12. The contact structure (10) according to any of previous claims 9 to 11, wherein the dense part (4) comprises a leg part (42) as integral part of the shaft (40) opposite to the at least one hollow part (2, 2A, 2B), wherein the leg part (42) comprises a through-hole (420).

13. The contact structure (10) according to any of claims 9 to 12, wherein the shaft (40) has a tapered form, wherein along a main extension direction of the dense part (4), a circumference of the shaft (40) monotonically changes.

14. An on-load tap changer (100) comprising a tank (90) and at least one contact structure (10) according to any of claims 1 to 13, wherein the contact structure (10) is arranged partly inside and partly outside the tank (90), wherein
- the shielding area (3, 3A, 3B) and the hollow part (2, 2A, 2B) of the contact structure (10) are arranged completely inside the tank (90), and
- the dense part (4) of the contact structure (10) extends throughout an opening of the tank (90) and is arranged partly inside and partly outside the tank (90).

15. A method for producing the contact structure (10) of any of claims 1 to 13, wherein the method comprises an additive manufacturing step for producing the contact structure (10).
